# EUROPÄISCHE PATENTSCHRIFT

(11) **EP 2 580 022 B1**
(45) Veröffentlichungstag und Bekanntmachung des Hinweises auf die Patenterteilung: **08.07.2015**
(21) Anmeldenummer: 11720112.9
(22) Anmeldetag: 18.05.2011
(51) Int. Cl.: B25B 23/00

(54) **HANDWERKZEUGMASCHINE MIT EINER WERKZEUGAUFNAHME**
PORTABLE MACHINE TOOL COMPRISING A TOOL FITTING
MACHINE-OUTIL À MAIN MUNIE D'UN RACCORDEMENT D'OUTIL

(30) Priorität: 09.06.2010 DE 102010029829; 29.06.2010 DE 102010030642
(43) Veröffentlichungstag der Anmeldung: 17.04.2013
(73) Patentinhaber: Robert Bosch GmbH, 70442 Stuttgart (DE)
(72) Erfinder: WAN, Mohsein, Bukit Mertajam, Penang 14000 (MY); LOW, Chun How, Tanjong Bungah, Penang 11200 (MY); LEE, Siew Yuen, Relau, 11900 Bayan Lepas (MY); LOH, Chun Chee, Bayan Lepas, Penang 11900 (MY)
(86) Internationale Anmeldenummer: PCT/EP2011/058057
(87) Internationale Veröffentlichungsnummer: WO 2011/154230

(56) Entgegenhaltungen:
- EP-A1- 2 039 449
- EP-A2- 1 938 927
- DE-U1- 20 317 932
- US-A- 2 518 139
- US-A1- 2004 104 545
- US-A1- 2005 132 846
- US-B1- 7 028 589

## Beschreibung

### Stand der Technik

Die vorliegende Erfindung betrifft eine Handwerkzeugmaschine mit einer Werkzeugaufnahme, gemäß dem Oberbegriff des Patentanspruchs 1.

Eine Handwerkzeugmaschine mit einer Werkzeugaufnahme der eingangs genannten Art ist beispielsweise aus der US-A-2,518,139 bekannt.

Aus der EP 2 039 449 A1 ist auch eine derartige, als Drehschlagschrauber ausgebildete Handwerkzeugmaschine bekannt, die eine Werkzeugaufnahme aufweist, die sowohl mit einem Einsatzwerkzeug mit einer Außenmehrkant-Kupplung, z. B. einem Schrauberbit, als auch mit einem Einsatzwerkzeug mit einer Innenmehrkant-Kupplung, z. B. einem Steckschlüssel, verbindbar ist. Zur Fixierung eines Schrauberbits an der Werkzeugaufnahme ist eine Verriegelungsvorrichtung vorgesehen, bei der eine Betätigungshülse in einer zugeordneten Verriegelungsposition Haltekugeln durch in der Werkzeugaufnahme vorgesehene Öffnungen radial einwärts drückt, sodass die Haltekugeln in eine an der Außenmehrkant-Kupplung des Schrauberbits ausgebildete Nut eingreifen und somit den Schrauberbit in der Mehrkant-Innenaufnahme der Werkzeugaufnahme verriegeln. Die Betätigungshülse ist mittels einer zugeordneten Kompressionsfeder in eine vom Schrauberbit wegweisende axiale Richtung vorgespannt und muss zum Entriegeln des Schrauberbits gegen die Kraft dieser Feder axial in Richtung des Schrauberbits geschoben werden, um eine Freigabe der Haltekugeln zu ermöglichen.

Nachteilig am Stand der Technik ist, dass die Handhabung der Handwerkzeugmaschine bei einer Betätigung der Betätigungshülse umständlich und kompliziert ist und somit zu Komforteinbußen bei der Benutzung einer derartigen Handwerkzeugmaschine führt.

### Offenbarung der Erfindung

Eine Aufgabe der Erfindung ist es daher, eine Werkzeugaufnahme mit einer Verriegelungsvorrichtung bereit zu stellen, die ein einfaches und schnelles Entriegeln eines Einsatzwerkzeugs mit Außenmehrkant-Kupplung ermöglicht.

Dieses Problem wird gelöst durch eine Handwerkzeugmaschine mit einer Werkzeugaufnahme, der eingangs genannten Art durch die im Kennzeichen des Patentanspruchs 1 aufgeführten Merkmale.

Die Erfindung ermöglicht somit die Bereitstellung einer Handwerkzeugmaschine mit einer Werkzeugaufnahme, in der ein Einsatzwerkzeug mit Außenmehrkant-Kupplung zuverlässig und sicher verriegelbar ist und die bei einer Entriegelung zur Entnahme eines derartigen Einsatzwerkzeugs einfach zu handhaben ist.

Gemäß einer Ausführungsform weist die Verriegelungsvorrichtung ein Blockierglied zum Blockieren des Betätigungselements in der vorgegebenen Verriegelungsposition oder in der vorgegebenen Entriegelungsposition auf.

Somit kann eine sichere Blockierung des Betätigungselements in der Verriegelungsposition und in der Entriegelungsposition ermöglicht werden.

Das Betätigungselement weist bevorzugt ein erstes und ein zweites Stoppglied auf. Das erste Stoppglied liegt zum Blockieren des Betätigungselements in der vorgegebenen Entriegelungsposition gegen das Blockierglied an. Das zweite Stoppglied liegt zum Blockieren des Betätigungselements in der vorgegebenen Verriegelungsposition gegen das Blockierglied an.

Somit kann auf einfache Art und Weise eine zuverlässige Blockierung des Betätigungselements in der Verriegelungsposition und in der Entriegelungsposition an dem Blockierglied erreicht werden.

Das Blockierglied ist bevorzugt dazu ausgebildet, ein Verdrehen des Betätigungselements über die vorgegebene Verriegelungsposition oder die vorgegebene Entriegelungsposition hinweg zu verhindern.

Somit kann eine stabile und zuverlässige Blockierung des Betätigungselements durch das Blockierglied erreicht werden.

Gemäß einer Ausführungsform ist das Betätigungselement hülsenförmig ausgebildet und weist an seinem Innenumfang eine Aussparung auf, in der das Blockierglied zumindest abschnittsweise angeordnet ist und an der das erste und zweite Stoppglied schulterartig ausgebildet sind.

Die Erfindung ermöglicht somit die Bereitstellung eines unkomplizierten und kostengünstigen Betätigungselements.

Das hülsenförmige Betätigungselement ist bevorzugt koaxial zur Längsachse der Werkzeugaufnahme angeordnet.

Somit kann eine einfache und funktionssichere Anordnung des Betätigungselements erreicht werden.

Das Blockierglied ist bevorzugt bolzenartig ausgebildet.

Somit kann ein stabiles und kostengünstiges Blockierglied bereitgestellt werden.

Gemäß einer Ausführungsform weist die Verriegelungsvorrichtung ein Federelement auf, das dazu ausgebildet ist, das Betätigungselement mit einer vorgegebenen Federkraft in einer quer zur Längsachse der Werkzeugaufnahme verlaufenden Richtung zu beaufschlagen.

Die Erfindung ermöglicht somit die Bereitstellung eines Betätigungselements, dass auf einfache Art und Weise von dem Federelement ausgehend von der Entriegelungsposition zurück in die Verriegelungsposition verstellbar ist.

Das Betätigungselement ist bevorzugt hülsenförmig ausgebildet und weist an seinem Innenumfang eine Nut mit einem Anschlag auf, gegen den das Federelement in der vorgegebenen Verriegelungsposition anliegt.

Somit kann ein einfaches und kostengünstiges Betätigungselement bereitgestellt werden.

Das Federelement ist bevorzugt dazu ausgebildet, das Betätigungselement in der vorgegebenen Entriegelungsposition mit seiner Federkraft zu beaufschlagen, um ein Verdrehen des Betätigungselements relativ zur Werkzeugaufnahme zu ermöglichen, wobei die Nut am Federelement bis zum Anschlagen des Anschlags am Federelement verschoben wird.

Die Erfindung ermöglicht somit ein komfortables und selbsttätiges Verstellen des Betätigungselements von der Entriegelungsposition in die Verriegelungsposition durch die Federkraft des Federelements.

Das Federelement weist bevorzugt eine Druckfeder und eine von dieser gegen das Betätigungselement beaufschlagte Kugel auf.

Somit kann ein einfaches und funktionssicheres Federelement bereitgestellt werden.

Das Eingangs genannte Problem wird auch gelöst durch eine Werkzeugaufnahme gemäß Anspruch 12.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine mit einem Einsatzwerkzeug gemäß einer Ausführungsform,
Fig. 2 eine perspektivische Ansicht der Abtriebswelle mit der Werkzeugaufnahme von Fig. 1, mit einer Verriegelungsvorrichtung gemäß einer Ausführungsform,
Fig. 3 eine perspektivische Explosionsansicht der Abtriebswelle mit der Werkzeugaufnahme von Fig. 1 und 2 bei einer Montage der Verriegelungsvorrichtung von Fig. 2,
Fig. 4 eine Schnittansicht in Längsrichtung der Abtriebswelle mit der Werkzeugaufnahme und der Verriegelungsvorrichtung von Fig. 2 und 3 in der Verriegelungsposition, sowie einer Rückstelleinrichtung gemäß einer ersten Ausführungsform,
Fig. 5 eine Schnittansicht in Querrichtung der Anordnung von Fig. 4, gesehen in Richtung der Pfeile V-V von Fig. 4,
Fig. 6 eine vergrößerte Schnittansicht in Querrichtung eines Ausschnitts der Anordnung von Fig. 4, gesehen in Richtung der Pfeile VI-VI von Fig. 4,
Fig. 7 eine Schnittansicht in Längsrichtung der Abtriebswelle mit der Werkzeugaufnahme, sowie der Verriegelungsvorrichtung von Fig. 2 und 3 in der Entriegelungsposition,
Fig. 8 eine Schnittansicht in Querrichtung der Anordnung von Fig. 7, gesehen in Richtung der Pfeile VIII-VIII von Fig. 7,
Fig. 9 eine vergrößerte Schnittansicht in Querrichtung eines Ausschnitts der Anordnung von Fig. 7, gesehen in Richtung der Pfeile IX-IX von Fig. 7,
Fig. 10 eine vergrößerte Schnittansicht eines Ausschnitts X der Anordnung von Fig. 7 mit einer Rückstelleinrichtung gemäß einer zweiten Ausführungsform,
Fig. 11 eine Schnittansicht in Querrichtung der Anordnung von Fig. 7 mit der Rückstelleinrichtung von Fig. 10, gesehen in Richtung der Pfeile XI-XI von Fig. 10 beim Entriegeln der Verriegelungsvorrichtung von Fig. 7,
Fig. 12 die Schnittansicht von Fig. 11 beim Verriegeln der Verriegelungsvorrichtung von Fig. 7,
Fig. 13 eine vergrößerte Schnittansicht eines Ausschnitts XIII der Anordnung von Fig. 4 mit einer Rückstelleinrichtung gemäß einer dritten Ausführungsform,
Fig. 14 eine perspektivische Ansicht einer Torsionsfeder und einer Stützscheibe der Rückstelleinrichtung von Fig. 13, und
Fig. 15 eine Schnittansicht in Querrichtung der Anordnung von Fig. 4 mit der Rückstelleinrichtung von Fig. 13, gesehen in Richtung der Pfeile XV-XV von Fig. 13 beim Verriegeln der Verriegelungsvorrichtung von Fig. 4.

### Beschreibung der Ausführungsbeispiele

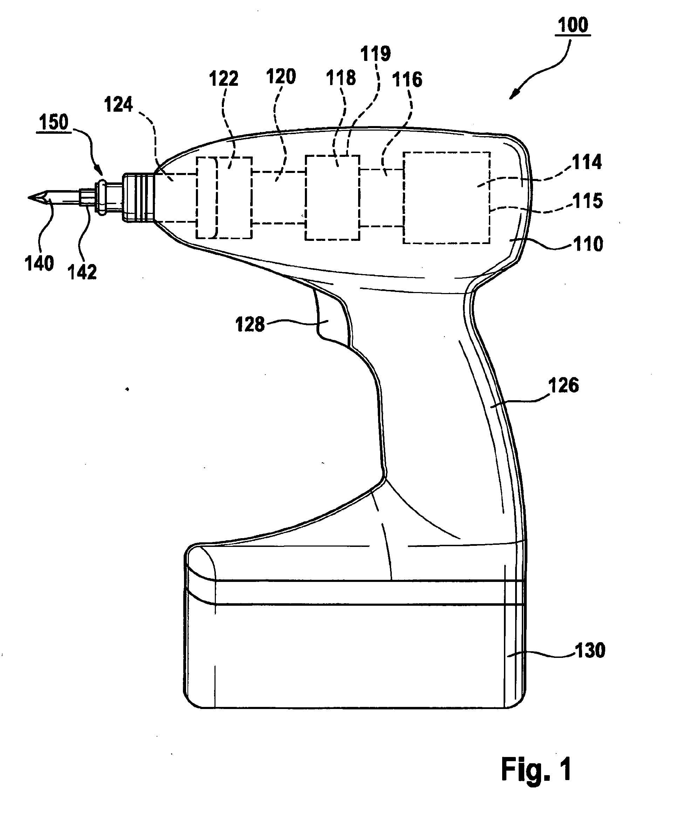

Fig. 1 zeigt eine mit einer Werkzeugaufnahme 150 versehene Handwerkzeugmaschine 100, die ein Gehäuse 110 mit einem Handgriff 126 aufweist. Gemäß einer Ausführungsform ist die Handwerkzeugmaschine 100 zur netzunabhängigen Stromversorgung mechanisch und elektrisch mit einem Akkupack 130 verbindbar.

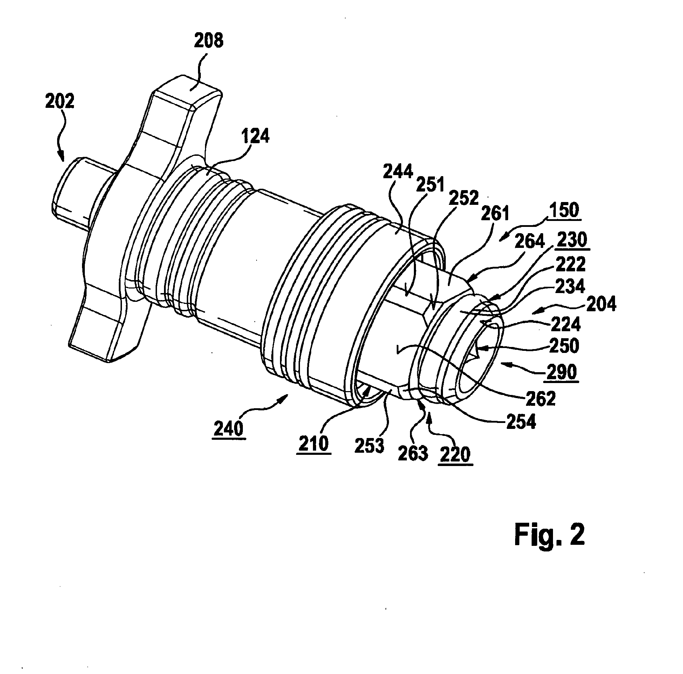

Die Handwerkzeugmaschine 100 ist beispielhaft als Akku-Drehschlagschrauber ausgebildet. Es wird jedoch darauf hingewiesen, dass die vorliegende Erfindung nicht auf Akku-Drehschlagschrauber beschränkt ist, sondern vielmehr bei unterschiedlichen Elektrowerkzeugen Anwendung finden kann, bei denen ein Werkzeug in Drehungen versetzt wird, z. B. bei einem Schrauber, einem Bohrschrauber, einer Schlagbohrmaschine etc., unabhängig davon, ob das Elektrowerkzeug netzunabhängig mit einem Akkupack oder netzabhängig betreibbar ist. Darüber hinaus wird darauf hingewiesen, dass die vorliegende Erfindung nicht auf motorbetriebene Handwerkzeugmaschinen beschränkt ist, sondern allgemein bei Werkzeugen verwendbar ist, bei denen die bei Fig. 2 bis 9 beschriebene Werkzeugaufnahme 150 Anwendung finden kann.

In dem Gehäuse 110 sind ein von dem Akkupack 130 mit Strom versorgter, elektrischer Antriebsmotor 114, ein Getriebe 118 und ein Schlagwerk 122 angeordnet. Der Antriebsmotor 114 ist z. B. über einen Handschalter 128 betätigbar, d. h. ein- und ausschaltbar, und kann ein beliebiger Motortyp sein, z. B. ein elektronisch kommutierter Motor oder ein Gleichstrommotor. Vorzugsweise ist der Antriebsmotor 114 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt und werden deshalb hier zwecks Knappheit der Beschreibung nicht weiter beschrieben.

Der Antriebsmotor 114 ist über eine zugeordnete Motorwelle 116 mit dem Getriebe 118 verbunden, das eine Drehung der Motorwelle 116 in eine Drehung einer zwischen Getriebe 118 und Schlagwerk 122 vorgesehenen Antriebswelle 120 umwandelt. Diese Umwandlung erfolgt bevorzugt derart, dass die Antriebswelle 120 sich relativ zur Motorwelle 116 mit vergrößertem Drehmoment, aber verringerter Drehgeschwindigkeit dreht. Der Antriebsmotor 114 ist illustrativ in einem Motorgehäuse 115 angeordnet und das Getriebe 118 in einem Getriebegehäuse 119, wobei das Getriebegehäuse 119 und das Motorgehäuse 115 beispielhaft in dem Gehäuse 110 angeordnet sind.

Das mit der Antriebswelle 120 verbundene Schlagwerk 122 ist beispielhaft ein Dreh- bzw. Rotationsschlagwerk, das schlagartige Drehimpulse mit hoher Intensität erzeugt und auf eine Abtriebswelle 124, z. B. eine Abtriebsspindel, überträgt. An der Abtriebswelle 124 ist die Werkzeugaufnahme 150 vorgesehen, die bevorzugt zur Aufnahme von Einsatzwerkzeugen ausgebildet ist und gemäß einer Ausführungsform sowohl mit einem Einsatzwerkzeug 140 mit Außenmehrkant-Kupplung 142, als auch mit einem Einsatzwerkzeug mit Innenmehrkant-Kupplung, z. B. einem Steckschlüssel, verbindbar ist. Das Einsatzwerkzeug 140 ist beispielhaft als Schrauberbit mit der Außenmehrkant-Kupplung 142, illustrativ einer Achtkant-Kupplung, ausgebildet, die in einer geeigneten Innenaufnahme (290 in Fig. 2) der Werkzeugaufnahme 150 angeordnet ist. Ein derartiges Schrauberbit sowie ein geeigneter Steckschlüssel sind hinreichend aus dem Stand der Technik bekannt, sodass hier zwecks Knappheit der Beschreibung auf eine eingehende Beschreibung verzichtet wird.

Fig. 2 zeigt die Abtriebswelle 124 von Fig. 1, deren mit einem Abtriebsnocken 208 versehener proximaler Endbereich 202 in Fig. 1 mit dem Schlagwerk 122 der Handwerkzeugmaschine 100 verbunden ist. An der Abtriebswelle 124 ist die Werkzeugaufnahme 150 vorgesehen, in deren distalem Endbereich 204 illustrativ eine axiale Erweiterung 220 ausgebildet ist. Diese ist vorzugsweise an die Werkzeugaufnahme 150 angeformt und bevorzugt einstückig mit dieser ausgebildet.

Die mit einer Außenaufnahme 210 und einer Innenaufnahme 290 versehene Werkzeugaufnahme 150 ist illustrativ an die Abtriebswelle 124 angeformt und bevorzugt einstückig mit dieser ausgebildet. Der Außenaufnahme 210 ist ein bevorzugt elastisch verformbares Halteglied 230 und der Innenaufnahme 290 eine betätigbare Verriegelungsvorrichtung 240 zugeordnet.

Die Innenaufnahme 290 dient zur Aufnahme des Schrauberbits 140 von Fig. 1 und ist beispielhaft nach Art einer Mehrkant-Innenaufnahme im Inneren der Abtriebswelle 124 ausgebildet, illustrativ nach Art eines Achtkant-Innenprofils 250. Der Innenaufnahme 290 ist die über ein bevorzugt als Betätigungshülse ausgeführtes Betätigungselement 244 betätigbare Verriegelungsvorrichtung 240 zur Verriegelung des Schrauberbits 140 von Fig. 1 zugeordnet.

Die Außenaufnahme 210 ist beispielhaft eine Mehrkant-Außenaufnahme, bevorzugt eine Vierkant-Außenaufnahme, die in radialer Richtung gesehen illustrativ vier vorzugsweise plane Seitenflächen 261, 262, 263, 264 aufweist und gemäß einer Ausführungsform zur Aufnahme eines gemäß europäischen oder nordamerikanischen Industriestandards hergestellten Einsatzwerkzeugs mit Innenmehrkant-Kupplung, z. B. eines Steckschlüssels, ausgebildet ist. Die Seitenflächen 261, 262, 263, 264 sind über abgeschrägte Kanten miteinander verbunden, z. B. sind die Flächen 261 und 262 über eine abgeschrägte Kante 251 und die Flächen 262 und 263 über eine abgeschrägte Kante 253 miteinander verbunden. Die abgeschrägten Kanten weisen ihrerseits zur axialen Erweiterung 220 hin abgeschrägte Endbereiche auf, z. B. weisen die Kanten 251, 253 abgeschrägte Endbereiche 252 bzw. 254 auf. Die axiale Erweiterung 220 hat einen Abschlusskragen 222, der ein in distaler Richtung der Abtriebswelle 124 konusförmig abgeschrägtes Ende 224 aufweist.

Zur Befestigung eines geeigneten Einsatzwerkzeugs mit Innenmehrkant-Kupplung an der Werkzeugaufnahme 150 ist das an der axialen Erweiterung 220 befestigte Halteglied 230 ausgebildet. Dieses weist illustrativ ein als elastisch verformbarer, metallener C-Ring ausgebildetes Halteelement 234 auf.

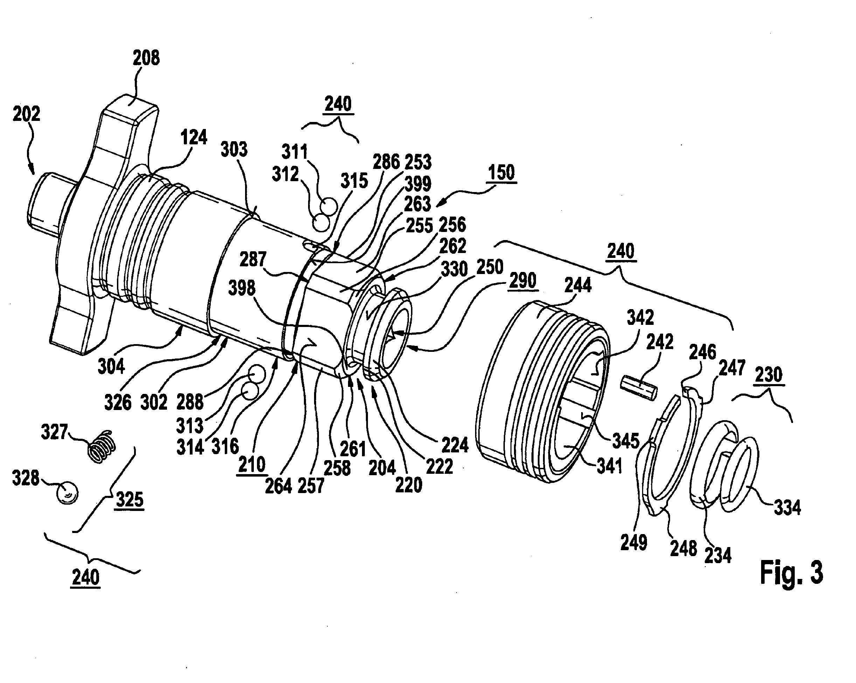

Fig. 3 zeigt die Abtriebswelle 124 mit der Werkzeugaufnahme 150 und der axialen Erweiterung 220, sowie dem Halteglied 230 und der Verriegelungsvorrichtung 240 von Fig. 2. Fig. 3 dient zur Illustration einer beispielhaften Montage des Halteglieds 230 und der Verriegelungsvorrichtung 240 an der mit der Innenaufnahme 290 und der Außenaufnahme 210 versehenen Werkzeugaufnahme 150 bzw. der Abtriebswelle 124. Wie aus Fig. 3 ersichtlich ist, sind zwischen den Seitenflächen 263 und 264 bzw. 264 und 261 der Außenaufnahme 210 abgeschrägte Kanten 255 bzw. 257 vorgesehen. Diese weisen abgeschrägte Endbereiche 256 bzw. 258 auf.

Gemäß einer Ausführungsform weist die Abtriebswelle 124 ausgehend von dem Abtriebsnocken 208 in Richtung des distalen Endbereichs 204 einen ersten bevorzugt zylinderförmigen Abschnitt 304 mit einem ersten Durchmesser D1 auf. An einer ersten Schulter 303 verjüngt sich die Welle 124 und geht in einen zweiten zylinderförmigen Abschnitt 302 mit einem zweiten Durchmesser D2 über, mit D2 < D1. An einer zweiten Schulter 399 verjüngt sich die Abtriebswelle 124 erneut und geht in die Außenaufnahme 210 über, die ihrerseits an einer dritten Schulter 398 in die axiale Erweiterung 220 übergeht. Im Bereich der ersten Schulter 303 ist am zweiten zylinderförmigen Abschnitt 302 illustrativ eine erste radiale Öffnung 326 ausgebildet. Im Bereich der zweiten Schulter 399 ist am Abschnitt 302 mindestens eine zweite radiale Öffnung 315 ausgebildet, der beispielhaft eine dritte, diametral gegenüberliegend angeordnete Öffnung 316 zugeordnet ist. Im Bereich zwischen der zweiten Schulter 399 und der Außenaufnahme 210 ist mindestens eine nutartige Aussparung 286 ausgebildet. Bevorzugt sind vier nutartige Aussparungen vorgesehen, von denen in Fig. 3 nur die Aussparungen 286, 287, 288 sichtbar sind, die jeweils zwischen der zweiten Schulter 399 und zugeordneten, abgeschrägten Kanten 253, 255 bzw. 257 ausgebildet sind. An der axialen Erweiterung 220 ist zwischen der dritten Schulter 398 und dem Abschlusskragen 222 eine äußere nutartige Aussparung in Form einer Ringnut 330 ausgebildet.

Es wird darauf hingewiesen, dass der Abstand zwischen gegenüberliegenden abgeschrägten Kanten, z. B. zwischen den Kanten 253 und 257, bevorzugt etwa dem Durchmesser D2 des zweiten Abschnitts 302 der Abtriebswelle 124 entspricht, sodass zwischen diesen abgeschrägten Kanten 253, 257 und der zweiten Schulter 399 die oben beschriebenen nutartigen Aussparungen 286 bzw. 288 ausgebildet sind. Der Abstand zwischen gegenüberliegenden Seitenflächen der Vierkant-Außenaufnahme 210, d. h. der Abstand zwischen den Seitenflächen 261 und 263 oder der Abstand zwischen den Seitenflächen 262 und 264, ist beispielhaft kleiner als der Durchmesser D2 und bevorzugt derart vorgegeben, dass zwischen den Seitenflächen 261, 262, 263, 264 und der Schulter 399 keine Aussparungen ausgebildet sind. Es ist jedoch ebenso möglich, auch zwischen den Seitenflächen 261, 262, 263, 264 und der Schulter 399 nutartige Aussparungen auszubilden, die darüber hinaus mit den nutartigen Aussparungen 286, 287, 288 z.B. eine Ringnut bilden können.

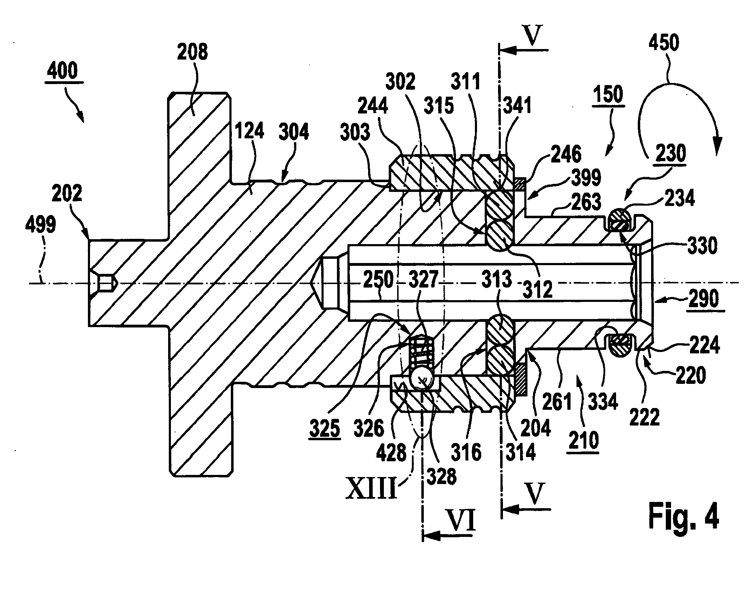

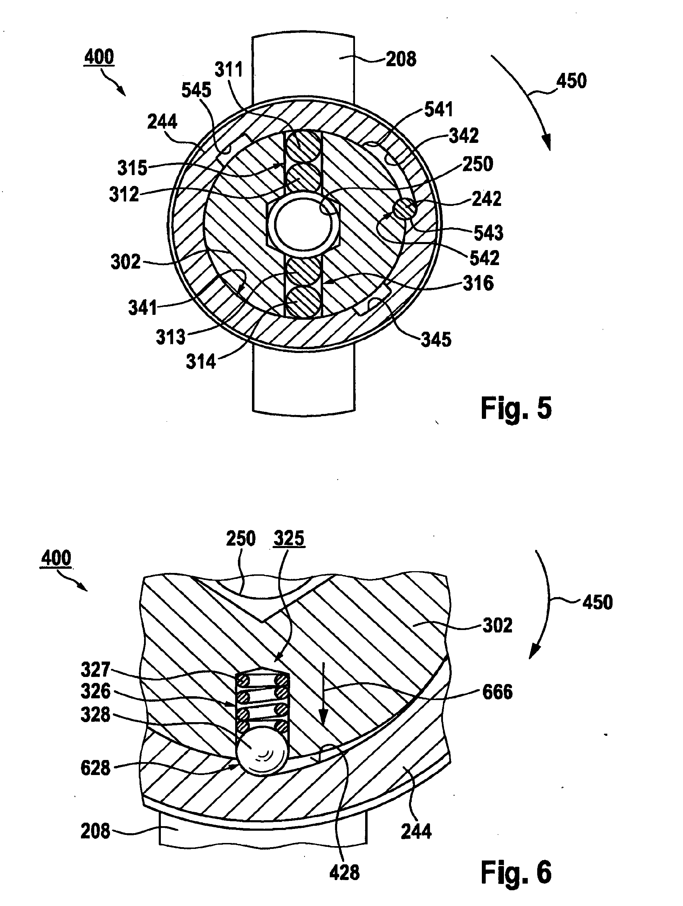

Gemäß einer Ausführungsform weist die Verriegelungsvorrichtung 240 die Betätigungshülse 244, ein nach Art eines Bolzens ausgebildetes Blockierglied 242, ein beispielhaft als C-Ring ausgebildetes Rückhalteelement 246, ein Federelement 325 mit einer Druckfeder 327 und einer Kugel 328, sowie vier Kugeln 311, 312, 313, 314 auf. Die Betätigungshülse 244 hat illustrativ einen Innenumfang 341, an dem gemäß einer Ausführungsform zwei Entriegelungsaussparungen 345 (und 545 in Fig. 5, 7 und 8), eine Aussparung 342 und eine Nut (428 in Fig. 4, 6, 7 und 9) vorgesehen sind, deren Funktionalität unten bei den Fig. 4 bis 9 beschrieben ist. Die Druckfeder 327 und die Kugel 328 sind in die Öffnung 326, die Kugeln 311, 312 in die Öffnung 315 und die Kugeln 313, 314 in die Öffnung 316 der Abtriebswelle 124 einführbar. Die Druckfeder 327 mit der Kugel 328 und die Kugeln 311, 312, 313, 314 werden von der in Richtung des Abtriebsnockens 208 auf die Abtriebswelle 124 aufschiebbaren Betätigungshülse 244 in den Öffnungen 326, 315 bzw. 316 gehalten, wie unten bei Fig. 4 gezeigt.

Bei einer beispielhaften Montage der Verriegelungsvorrichtung 240 an der Werkzeugaufnahme 150 bzw. der Abtriebswelle 124 wird nach Einführen von Druckfeder 327 und Kugel 328 sowie den Kugeln 311, 312, 313, 314 in die Öffnungen 326, 315 bzw. 316 zunächst der Blockierbolzen 242 wie unten bei Fig. 5 beschrieben, dann die Betätigungshülse 244 und abschließend der mit radialen Erweiterungen 247, 248, 249 versehene Rückhalte-C-Ring 246 derart in Richtung des Abtriebsnockens 208 auf die Abtriebswelle 124 aufgeschoben, dass der Rückhalte-C-Ring 246 in die nutartigen Aussparungen 286, 287, 288 eingreift. Somit blockieren die radialen Erweiterungen 247, 248, 249 die Betätigungshülse 244 und fixieren die Verriegelungsvorrichtung 240 auf der Abtriebswelle 124.

Es wird jedoch darauf hingewiesen, dass die im Rahmen der vorliegenden Erfindung beschriebene Verwendung der erfindungsgemäßen Verriegelungsvorrichtung 240 mit der Werkzeugaufnahme 150 von Fig. 3 lediglich beispielhaften Charakter hat und nicht als Einschränkung der Erfindung zu verstehen ist. Vielmehr kann die Verriegelungsvorrichtung 240 bei unterschiedlichen Werkzeugaufnahmen Anwendung finden, z. B. bei den verschiedenen, in der DE 10 2010 002 352 A1 und der DE 10 2010 002 353 A1 gezeigten Werkzeugaufnahmen.

Das Halteglied 230 weist gemäß einer Ausführungsform den metallenen C-Ring 234 von Fig. 2 und ein bevorzugt als O-Ring aus einem elastischen Gummimaterial ausgebildetes Federelement 334 auf. Dieses dient dazu, nach einer Montage den C-Ring 234 radial mit einer vorgegebenen Federkraft zu beaufschlagen. Zur Montage des Halteglieds 230 an der axialen Erweiterung 220 wird zunächst der elastische O-Ring 334 über den Abschlusskragen 222 in die Ringnut 330 geschoben bzw. gedrückt. Dann wird der metallene C-Ring 234 radial über dem O-Ring 334 angeordnet, z. B. durch Aufschieben über den Abschlusskragen 222. Fig. 4 zeigt eine Anordnung 400 mit der Abtriebswelle 124, der Werkzeugaufnahme 150 und der axialen Erweiterung 220 von Fig. 2 nach einer oben bei Fig. 3 beschriebenen Montage der Verriegelungsvorrichtung 240 und des Halteglieds 230 von Fig. 3. Hierbei ist die Verriegelungsvorrichtung 240 in einer zugeordneten Verriegelungsposition gezeigt, in der die Kugeln 311, 312, 313, 314 vom Innenumfang 341 der Betätigungshülse 244 radial einwärts in die Öffnungen 315 bzw. 316 gedrückt werden. Um die Verriegelungsvorrichtung 240 von der Verriegelungsposition in eine Entriegelungsposition zu verfahren, muss die Betätigungshülse 244 in Richtung eines Pfeils 450 verdreht werden, wie unten bei Fig. 5 und 6 beschrieben.

Wie aus Fig. 4 ersichtlich, ist die Betätigungshülse 244 gemäß einer Ausführungsform koaxial zu einer Längsachse 499 der Werkzeugaufnahme 150 und axial unbeweglich zwischen der ersten Schulter 303 und dem Rückhalte-C-Ring 246 angeordnet, aber um die Längsachse 499 in und gegen die Richtung des Pfeils 450 verdrehbar. In einer am Innenumfang 341 der Hülse 244 ausgebildeten Nut 428 ist die Kugel 328 des Federelements 325 zumindest abschnittsweise angeordnet. Das Federelement 325, die Öffnung 326 und die Nut 428 bilden eine Rückstelleinrichtung gemäß einer ersten Ausführungsform.

Fig. 5 zeigt die Anordnung 400 von Fig. 4 mit den vom Innenumfang 341 der Betätigungshülse 244 radial einwärts in Richtung des Achtkant-Innenprofils 250 gedrückten, in den Öffnungen 315, 316 angeordneten Kugeln 311, 312 bzw. 313, 314. Der Blockierbolzen 242 ist einerseits abschnittsweise in einer am zweiten Abschnitt 302 der Abtriebswelle 124 von Fig. 4 vorgesehenen Ausnehmung 542 und andererseits abschnittsweise in der an der Betätigungshülse 244 vorgesehenen Aussparung 342 angeordnet. An dieser sind zwei schulterartige Stoppglieder 541, 543 ausgebildet, die dazu dienen, ein Verdrehen der Betätigungshülse 244 über die vorgegebene Verriegelungsposition oder die vorgegebene Entriegelungsposition hinweg zu verhindern. In der in Fig. 5 gezeigten Verriegelungsposition liegt die Stoppschulter 543 gegen den Blockierbolzen 242 an.

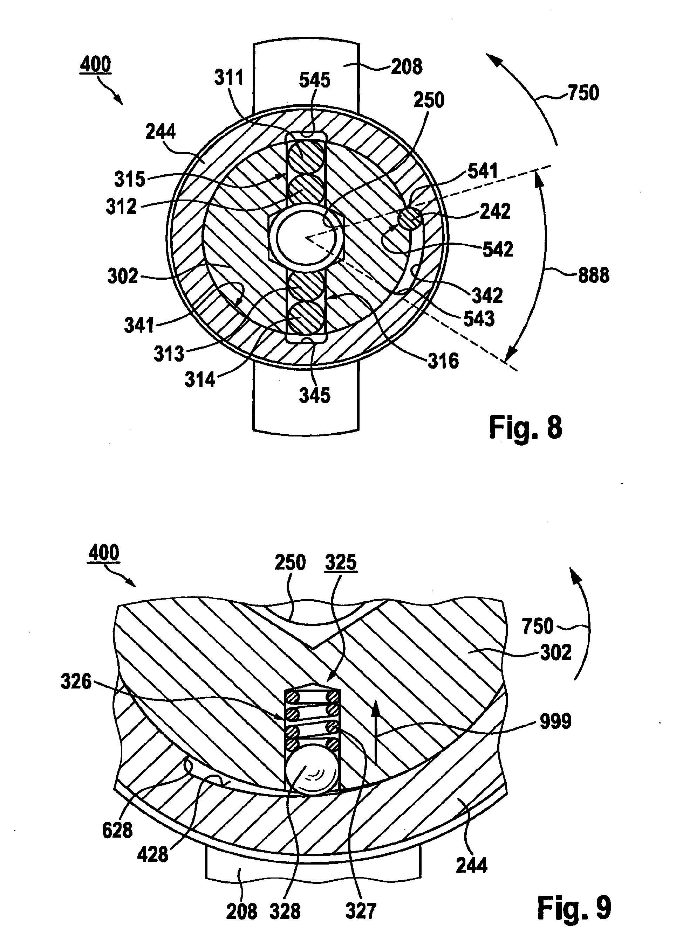

Bei einem Verdrehen der Betätigungshülse 244 in Richtung des Pfeils 450 wird die Aussparung 342 über dem Blockierbolzen 242 verfahren, bis die Stoppschulter 541 gegen den Bolzen 242 anschlägt und somit die Entriegelungsposition erreicht ist. Hierbei werden die am Innenumfang 341 der Hülse 244 ausgebildete Entriegelungsaussparung 345 sowie eine weitere daran ausgebildete Entriegelungsaussparung 545 über den Kugeln 314 bzw. 311 positioniert, wie unten bei Fig. 8 beschrieben.

Fig. 6 zeigt das Federelement 325 der Anordnung 400 von Fig. 4, bei dem die Druckfeder 327 die Kugel 328 in Richtung eines Pfeils 666 in eine gemäß einer Ausführungsform maximal radial auswärts vorgesehene Position in die an der Betätigungshülse 244 ausgebildete Nut 428 drückt, die der Verriegelungsposition der Verriegelungsvorrichtung 240 von Fig. 4 entspricht. Hierbei liegt die Kugel 328 gegen einen an der Nut 428 ausgebildeten, illustrativ schulterartigen Anschlag 628 an. Bei einem Verdrehen der Betätigungshülse 244 in Richtung des Pfeils 450 wird die Nut 428 über der Kugel 328 verfahren, bis die Kugel 328 gegen die Kraft der Druckfeder 327 in eine gemäß einer Ausführungsform maximal radial einwärts vorgesehene Position in die Öffnung 326 eingedrückt ist, wie unten bei Fig. 9 beschrieben.

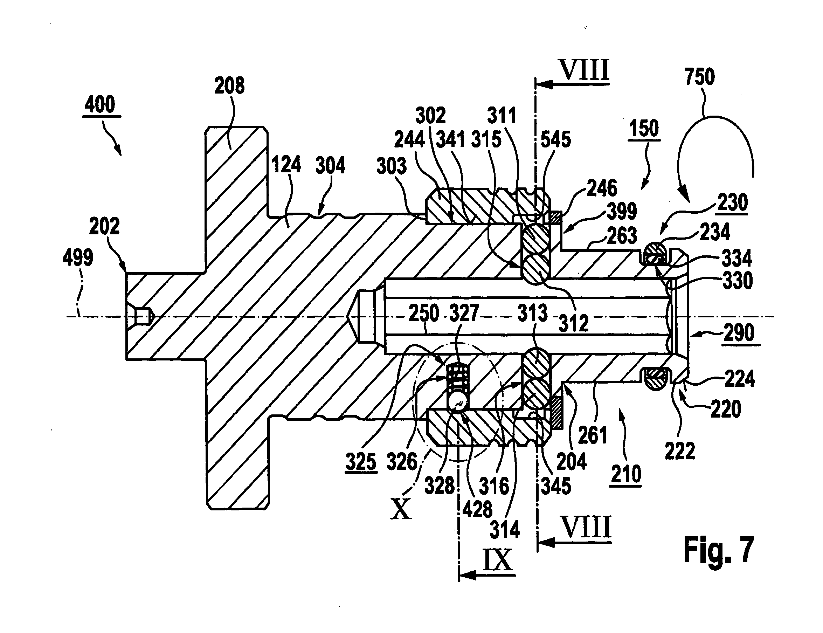

Fig. 7 zeigt die Anordnung 400 von Fig. 4 nach einem Verdrehen der Betätigungshülse 244 in Richtung des Pfeils 450 von Fig. 4 in einer zugeordneten Entriegelungsposition, in der die in den Öffnungen 315 bzw. 316 angeordneten Kugeln 311, 312, 313, 314 derart nach radial auswärts verschiebbar sind, dass die Kugeln 311, 314 zumindest abschnittweise in die am Innenumfang 341 der Betätigungshülse 244 vorgesehenen Entriegelungsaussparungen 545 bzw. 345 eingreifen können. Um die Verriegelungsvorrichtung 240 von der Entriegelungsposition zurück in die in Fig. 4 gezeigte Verriegelungsposition zu verfahren, muss die Betätigungshülse 244 in Richtung eines Pfeils 750 verdreht werden, wie unten bei Fig. 8 und 9 beschrieben. Darüber hinaus zeigt Fig. 7 die gemäß einer Ausführungsform maximal radial einwärts vorgesehene Position der gegen die Kraft der Druckfeder 327 in die Öffnung 326 eingedrückten Kugel 328.

Fig. 8 zeigt die Anordnung 400 von Fig. 7 mit den im Bereich der Kugeln 311, 314 angeordneten Entriegelungsaussparungen 545 bzw. 345 sowie der gegen den Bolzen 242 anliegenden Stoppschulter 541. Hierbei sind die Kugeln 311, 312, 313, 314 zum Einführen oder zur Entnahme eines geeigneten Einsatzwerkzeugs mit Außenmehrkant-Kupplung, z. B. Einsatzwerkzeug 140 mit Außenmehrkant-Kupplung 142 von Fig. 1, radial auswärts in Richtung der zugeordneten Entriegelungsaussparungen 545 bzw. 345 verschiebbar.

Wie aus Fig. 8 ersichtlich, wurde die Betätigungshülse 244 ausgehend von der in Fig. 4 bis 6 gezeigten Verriegelungsposition um einen Drehwinkel 888 in die Entriegelungsposition verdreht. Dieser Drehwinkel 888 wird von einer Ausdehnung der am Innenumfang 341 der Betätigungshülse 244 ausgebildeten Aussparung 342 in Umfangsrichtung vorgegeben und beträgt vorzugsweise weniger als 180°, bevorzugt weniger als 90° und besonders bevorzugt weniger als 45°. In der dargestellten Ausführungsform beträgt der Drehwinkel 888 illustrativ etwa 40°.

Fig. 9 zeigt die gemäß einer Ausführungsform maximal radial einwärts vorgesehene Position der gegen die Kraft der Druckfeder 327 in Richtung eines Pfeils 999 in die Öffnung 326 eingedrückten Kugel 328. Gemäß einer Ausführungsform muss ein Benutzer der Handwerkzeugmaschine 100 von Fig. 1 die Betätigungshülse 244 in dieser Entriegelungsposition blockieren bzw. festhalten, um ein selbsttätiges Verdrehen der Hülse 244 in die in Fig. 4 gezeigte Verriegelungsposition zu verhindern. Bei einem Freigeben der Betätigungshülse 244 durch den Benutzer drückt die Druckfeder 327 die Kugel 328 derart in eine dem Pfeil 999 entgegen gesetzte Richtung, d. h. in Richtung des Pfeils 666 von Fig. 6, dass die Nut 428 über der Kugel 328 verfahren wird, bis die Kugel 328 gegen den schulterartigen Anschlag 628 anschlägt, wie oben bei Fig. 6 beschrieben. Die Betätigungshülse 244 wird somit selbsttätig von der Entriegelungs- in die Verriegelungsposition verfahren.

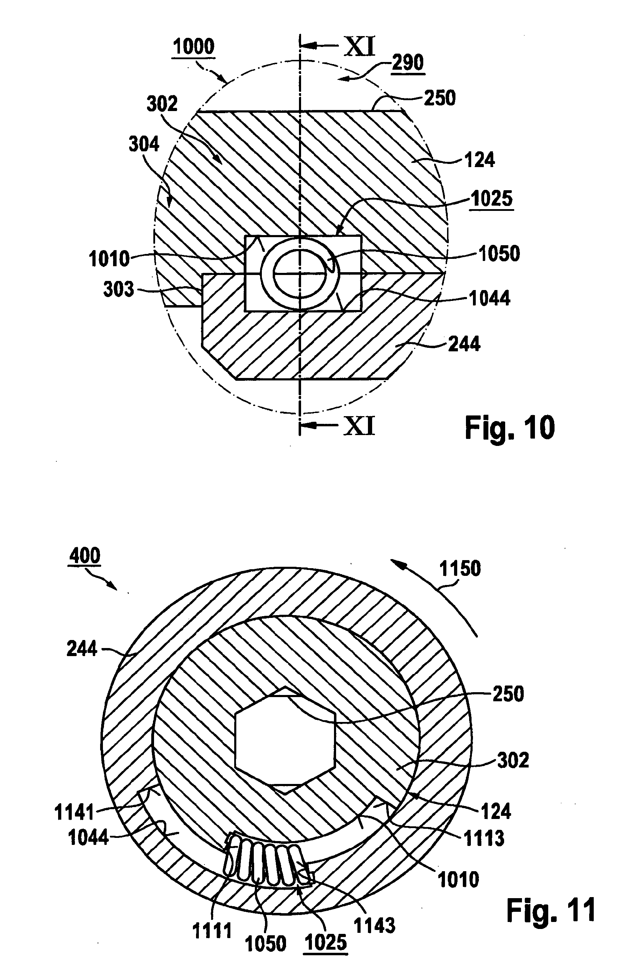

Fig. 10 zeigt einen vergrößerten Ausschnitt 1000 der Anordnung 400 von Fig. 7 mit einer daran vorgesehenen Rückstelleinrichtung 1025 gemäß einer zweiten Ausführungsform, die anstelle des in der Öffnung 326 von Fig. 7 angeordneten und mit der Nut 428 zusammenwirkenden Federelements 325 von Fig. 7 Anwendung finden kann. Die Rückstelleinrichtung 1025 weist ein illustrativ als Druckfeder ausgebildetes Federelement 1050 auf, das beispielhaft in einer im zweiten Abschnitt 302 der Abtriebswelle 124 vorgesehenen, ersten nutartigen Aussparung 1010 sowie einer in der Betätigungshülse 244 vorgesehenen, zweiten nutartigen Aussparung 1044 angeordnet ist. In einer alternativen Ausführungsvariante ist das Federelement 1050 als Zugfeder ausgebildet.

Fig. 11 zeigt die mit der Rückstelleinrichtung 1025 von Fig. 10 ausgeführte Anordnung 400 von Fig. 7, bei der die Betätigungshülse 244 illustrativ in die Entriegelungsposition verdreht ist. In dieser Entriegelungsposition muss die Betätigungshülse 244 gegen eine von der Druckfeder 1050 aufgebrachte Druckkraft gehalten werden, wie unten stehend beschrieben.

Die Druckfeder 1050 ist wie oben bei Fig. 10 beschrieben in der an der Abtriebswelle 124 vorgesehenen, ersten nutartigen Aussparung 1010 und der an der Betätigungshülse 244 vorgesehenen, zweiten nutartigen Aussparung 1044 angeordnet. Die erste nutartige Aussparung 1010 weist an ihren Enden in Längsrichtung beispielhaft eine Befestigungsschulter 1111 und eine gegenüberliegende Schulter 1113 auf. Die zweite nutartige Aussparung 1044 weist an ihren Enden in Längsrichtung beispielhaft eine Befestigungsschulter 1143 und eine gegenüberliegende Schulter 1141 auf. An der Befestigungsschulter 1111, 1143 ist jeweils illustrativ ein axiales Ende der Druckfeder 1050 befestigt, um somit eine verbesserte Stabilität der Rückstelleinrichtung 1025 zu erreichen.

Es wird jedoch darauf hingewiesen, dass die Druckfeder 1050 auch unbefestigt in den Aussparungen 1010, 1044 angeordnet sein kann, solange gewährleistet ist, dass diese nicht im Betrieb der Handwerkzeugmaschine 100 von Fig. 1 z. B. ausschließlich in eine der Aussparungen 1010, 1044 einrutschen kann bzw. eingedrückt werden kann. Dies kann beispielsweise dadurch verhindert werden, dass der Durchmesser der Druckfeder 1050 vergleichsweise groß in Bezug auf eine Höhe der Aussparungen 1010 bzw. 1044 gewählt wird.

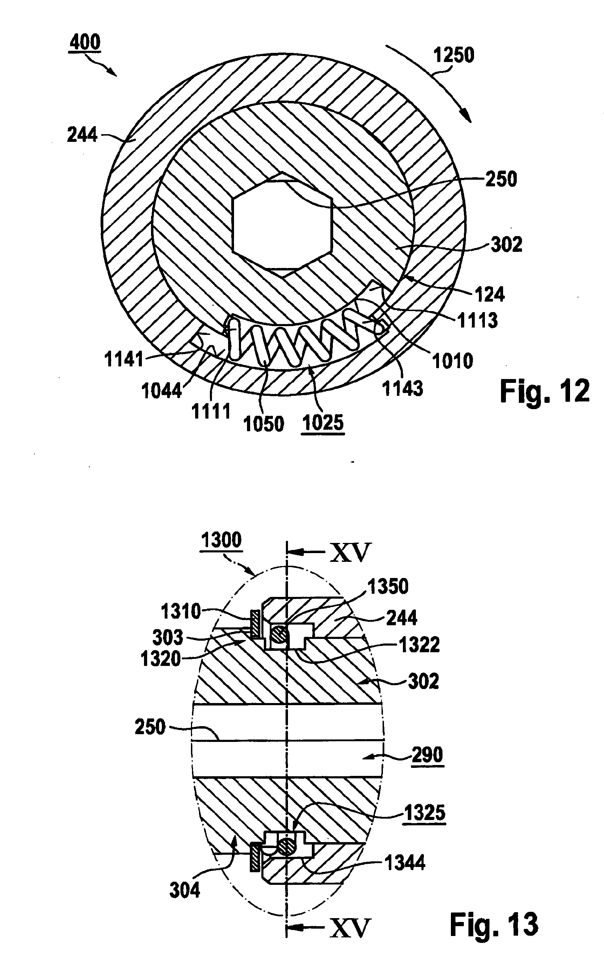

Gemäß einer Ausführungsform ist die Druckfeder 1050 in der Entriegelungsposition zwischen den Befestigungsschultern 1111, 1143 komprimiert. Beim Freigeben der Betätigungshülse 244 expandiert die Druckfeder 1050 und bewirkt somit ein Verdrehen der Betätigungshülse 244 relativ zur Antriebswelle 124 in Richtung eines Pfeils 1150, bei dem die Betätigungshülse 244 in die in Fig. 12 gezeigte Verriegelungsposition verfahren wird.

Fig. 12 zeigt die Schnittansicht von Fig. 11, bei der sich die Betätigungshülse 244 illustrativ durch Expansion der Druckfeder 1050 selbsttätig in Richtung des Pfeils 1150 von Fig. 11 in die Verriegelungsposition verdreht hat. In dieser Verriegelungsposition wird die Betätigungshülse 244 von der von der expandierten Druckfeder 1050 aufgebrachten Druckkraft gehalten. Durch ein Verdrehen der Betätigungshülse 1050 gegen die Druckkraft der Druckfeder 1050 in Richtung eines Pfeils 1250 kann die Betätigungshülse 244 dann erneut in die in Fig. 11 gezeigte Entriegelungsposition verfahren werden. Hierbei ist ein Verdrehen der Betätigungshülse 244 nur um einen vorgegebenen Drehwinkel möglich, z. B. den Drehwinkel 888 von Fig. 8, wie oben bei Fig. 8 beschrieben.

Fig. 13 zeigt einen vergrößerten Ausschnitt 1300 der Anordnung 400 von Fig. 4 mit einer daran vorgesehenen Rückstelleinrichtung 1325 gemäß einer dritten Ausführungsform, wobei die Rückstelleinrichtung 1325 anstelle des in der Öffnung 326 von Fig. 4 angeordneten und mit der Nut 428 zusammenwirkenden Federelements 325 von Fig. 4 Anwendung finden kann. Die Rückstelleinrichtung 1325 weist ein illustrativ als Torsionsfeder ausgebildetes Federelement 1350 auf, das beispielhaft in einer im zweiten Abschnitt 302 der Abtriebswelle 124 vorgesehenen, ersten nutartigen Aussparung 1322 sowie einer in der Betätigungshülse 244 vorgesehenen, zweiten nutartigen Aussparung 1344 angeordnet ist.

Gemäß einer Ausführungsform wird ein Ausrutschen der Torsionsfeder 1350 in Richtung des ersten Abschnitts 304 der Abtriebswelle 124 im Betrieb der Handwerkzeugmaschine 100 von Fig. 1 bzw. bei einem Entriegeln der Betätigungshülse 244 illustrativ durch eine Stützscheibe 1310 verhindert. Diese ist an der Schulter 303 zwischen dem ersten und zweiten Abschnitt 304 bzw. 302 der Abtriebswelle 124 im Bereich einer Abstufung 1320 gelagert. Die Abstufung 1320 bildet einen Übergang von der Schulter 303 zur nutartigen Aussparung 1322.

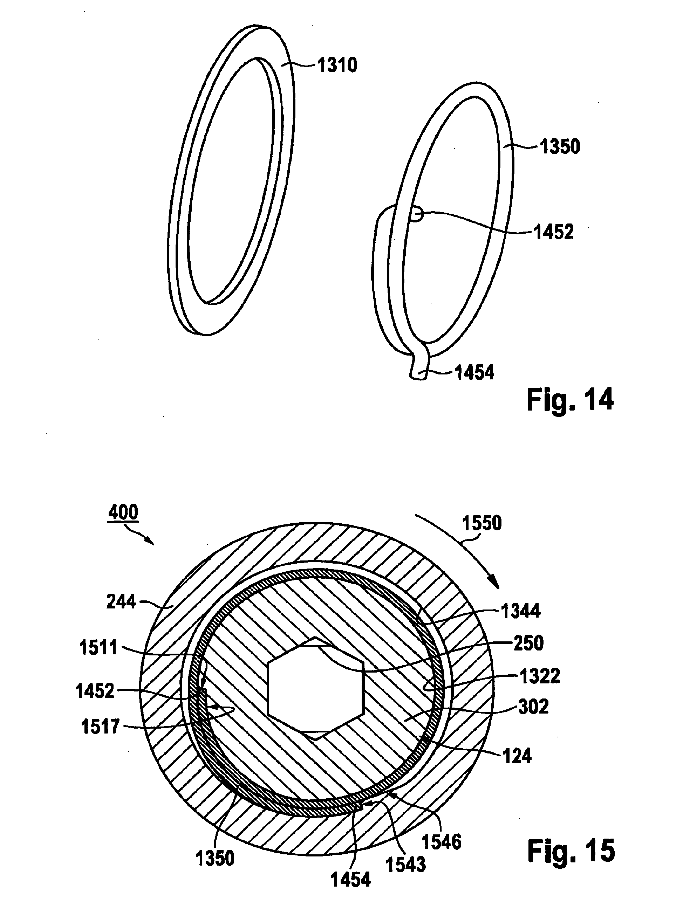

Fig. 14 zeigt eine beispielhafte Ausführungsform der Stützscheibe 1310 und der Torsionsfeder 1350 von Fig. 13. Die Stützscheibe 1310 ist illustrativ ringförmig ausgebildet. Die Torsionsfeder 1350 umspannt zwischen ihrem ersten Federende 1452 und ihrem zweiten Federende 1454 illustrativ einen Winkel von etwa 450°. Es wird jedoch darauf hingewiesen, dass die Darstellung eines Winkels von 450° lediglich beispielhaften Charakter hat und nicht zur Einschränkung der Erfindung dient. Diese kann vielmehr mit einer Vielzahl unterschiedlicher Torsionsfedern ausgeführt werden, die eine Vielzahl verschiedener Winkel umfassen, solange die unten bei Fig. 15 beschriebene Funktionalität gewährleistet ist.

Fig. 15 zeigt die mit der Rückstelleinrichtung 1325 von Fig. 13 ausgeführte Anordnung 400 von Fig. 4, bei der die Betätigungshülse 244 illustrativ in die Verriegelungsposition gedreht ist. Die Betätigungshülse 244 kann aus dieser Verriegelungsposition gegen eine von der Torsionsfeder 1350 aufgebrachte Rückstellkraft in Richtung eines Pfeils 1550 in die Entriegelungsposition verdreht werden.

Wie aus Fig. 15 ersichtlich, ist die Torsionsfeder 1350 in der Verriegelungsposition der Betätigungshülse 244 im Wesentlichen in der im zweiten Abschnitt 302 der Abtriebswelle 124 vorgesehenen, ersten nutartigen Aussparung 1322 gelagert, wobei das erste Federende 1452 illustrativ gegen eine erste Halteschulter 1522 anliegt, die in einer in der Aussparung 1322 vorgesehenen Vertiefung 1517 ausgebildet ist. Darüber hinaus ist die Torsionsfeder 1350 abschnittsweise in der in der Betätigungshülse 244 vorgesehenen, zweiten nutartigen Aussparung 1344 angeordnet, wobei das zweite Federende 1454 illustrativ gegen eine zweite Halteschulter 1543 anliegt, die an einer in der Aussparung 1344 vorgesehenen Erhöhung 1546 ausgebildet ist.

Gemäß einer Ausführungsform wird bei einem Verdrehen der Betätigungshülse 244 von der Verriegelungsposition in Richtung des Pfeils 1550 das zweite Federende 1454 von der zweiten Halteschulter 1543 in Richtung des Pfeils 1550 verschoben. Hierdurch weitet sich die Torsionsfeder 1350 radial in die nutartige Aussparung 1344 hinein auf und wird somit geladen bzw. gespannt, bis die Betätigungshülse 244 die Entriegelungsposition erreicht. Hierbei ist ein Verdrehen der Betätigungshülse 244 nur um einen vorgegebenen Drehwinkel möglich, z. B. den Drehwinkel 888 von Fig. 8, wie oben bei Fig. 8 beschrieben. Bei einer Freigabe der Betätigungshülse 244 kann diese folglich durch die Rückstellkraft der gespannten Torsionsfeder 1350 in eine dem Pfeil 1550 entgegengesetzte Richtung in die in Fig. 15 gezeigte Verriegelungsposition zurück verfahren werden.

## Patentansprüche

1. Handwerkzeugmaschine (100) mit einer Werkzeugaufnahme (150), die eine Mehrkant-Innenaufnahme (290) und eine Mehrkant-Außenaufnahme (210) aufweist, wobei die Mehrkant-Innenaufnahme (290) zur Verbindung mit einem ersten Einsatzwerkzeug (140) ausgebildet ist, das mit einer der Werkzeugaufnahme (150) zugeordneten Verriegelungsvorrichtung (240) in der Mehrkant-Innenaufnahme (290) verriegelbar ist, und die Mehrkant-Außenaufnahme (210) zur Verbindung mit einem zweiten Einsatzwerkzeug ausgebildet ist, das eine auf die Mehrkant-Außenaufnahme (210) aufschiebbare Innenmehrkant-Kupplung aufweist, wobei die Verriegelungsvorrichtung (240) ein Betätigungselement (244) aufweist, das zur Entriegelung des ersten Einsatzwerkzeugs (140) von einer vorgegebenen Verriegelungsposition um eine Längsachse (499) der Werkzeugaufnahme (150) in eine vorgegebene Entriegelungsposition drehbar ist, **dadurch gekennzeichnet, dass** eine federbeaufschlagte Rückstelleinrichtung (325, 326, 328, 428; 1025; 1325) vorgesehen ist, die dazu ausgebildet ist, das Betätigungselement (244) zur Verdrehung in die vorgegebene Verriegelungsposition zu beaufschlagen.

2. Handwerkzeugmaschine nach Anspruch 1, **dadurch gekennzeichnet, dass** die Verriegelungsvorrichtung (240) ein Blockierglied (242) zum Blockieren des Betätigungselements (244) in der vorgegebenen Verriegelungsposition oder in der vorgegebenen Entriegelungsposition aufweist.

3. Handwerkzeugmaschine nach Anspruch 2, **dadurch gekennzeichnet, dass** das Betätigungselement (244) ein erstes und ein zweites Stoppglied (541, 543) aufweist, wobei das erste Stoppglied (541) zum Blockieren des Betätigungselements (244) in der vorgegebenen Entriegelungsposition gegen das Blockierglied (242) anliegt und das zweite Stoppglied (543) zum Blockieren des Betätigungselements (244) in der vorgegebenen Verriegelungsposition gegen das Blockierglied (242) anliegt.

4. Handwerkzeugmaschine nach Anspruch 2 oder 3, **dadurch gekennzeichnet, dass** das Blockierglied (242) dazu ausgebildet ist, ein Verdrehen des Betätigungselements (244) über die vorgegebene Verriegelungsposition oder die vorgegebene Entriegelungsposition hinweg zu verhindern.

5. Handwerkzeugmaschine nach Anspruch 3 oder 4, **dadurch gekennzeichnet, dass** das Betätigungselement (244) hülsenförmig ausgebildet ist und an seinem Innenumfang (341) eine Aussparung (342) aufweist, in der das Blockierglied (242) zumindest abschnittsweise angeordnet ist und an der das erste und zweite Stoppglied (541, 543) schulterartig ausgebildet sind.

6. Handwerkzeugmaschine nach Anspruch 5, **dadurch gekennzeichnet, dass** das hülsenförmige Betätigungselement (244) koaxial zur Längsachse (499) der Werkzeugaufnahme (150) angeordnet ist.

7. Handwerkzeugmaschine nach einem der Ansprüche 2 bis 6, **dadurch gekennzeichnet, dass** das Blockierglied (242) bolzenartig ausgebildet ist.

8. Handwerkzeugmaschine nach einem der vorhergehenden Ansprüche, **dadurch gekennzeichnet, dass** die Verriegelungsvorrichtung (240) ein Federelement (325) aufweist, das dazu ausgebildet ist, das Betätigungselement (244) mit einer vorgegebenen Federkraft in einer quer zur Längsachse (499) der Werkzeugaufnahme verlaufenden Richtung (666) zu beaufschlagen.

9. Handwerkzeugmaschine nach Anspruch 8, **dadurch gekennzeichnet, dass** das Betätigungselement (244) hülsenförmig ausgebildet ist und an seinem Innenumfang (341) eine Nut (428) mit einem Anschlag (628) aufweist, gegen den das Federelement (325) in der vorgegebenen Verriegelungsposition anliegt.

10. Handwerkzeugmaschine nach Anspruch 9, **dadurch gekennzeichnet, dass** das Federelement (325) dazu ausgebildet ist, das Betätigungselement (244) in der vorgegebenen Entriegelungsposition mit seiner Federkraft zu beaufschlagen, um ein Verdrehen des Betätigungselements (244) relativ zur Werkzeugaufnahme (150) zu ermöglichen, wobei die Nut (428) am Federelement (325) bis zum Anschlagen des Anschlags (628) am Federelement (325) verschoben wird.

11. Handwerkzeugmaschine nach einem der Ansprüche 8 bis 10, **dadurch gekennzeichnet, dass** das Federelement (325) eine Druckfeder (327) und eine von dieser gegen das Betätigungselement (244) beaufschlagte Kugel (328) aufweist.

12. Werkzeugaufnahme (150), die eine Mehrkant-Innenaufnahme (290) und eine Mehrkant-Außenaufnahme (210) aufweist, wobei die Mehrkant-Innenaufnahme (290) zur Verbindung mit einem ersten Einsatzwerkzeug (140) ausgebildet ist, das mit einer der Werkzeugaufnahme (150) zugeordneten Verriegelungsvorrichtung (240) in der Mehrkant-Innenaufnahme (290) verriegelbar ist, und die Mehrkant-Außenaufnahme (210) zur Verbindung mit einem zweiten Einsatzwerkzeug ausgebildet ist, das eine auf die Mehrkant-Außenaufnahme (210) aufschiebbare Innenmehrkant-Kupplung aufweist, wobei die Verriegelungsvorrichtung (240) ein Betätigungselement (244) aufweist, das zur Entriegelung des ersten Einsatzwerkzeugs (140) von einer vorgegebenen Verriegelungsposition um eine Längsachse (499) der Werkzeugaufnahme (150) in eine vorgegebene Entriegelungsposition drehbar ist, **dadurch gekennzeichnet, dass** eine federbeaufschlagte Rückstelleinrichtung (325, 326, 328, 428; 1025; 1325) vorgesehen ist, die dazu ausgebildet ist, das Betätigungselement (244) zur Verdrehung in die vorgegebene Verriegelungsposition zu beaufschlagen.

## Claims

1. Portable power tool (100) having a tool receptacle (150) which has a polygonal inner receptacle (290) and a polygonal outer receptacle (210), wherein the polygonal inner receptacle (290) is configured to be connected to a first application tool (140) which is lockable in the polygonal inner receptacle (290) by way of a locking apparatus (240) assigned to the tool receptacle (150), and the polygonal outer receptacle (210) is configured to be connected to a second application tool which has an internal polygonal coupling that is pushable onto the polygonal outer receptacle (210), wherein the locking apparatus (240) has an actuating element (244) which, in order to unlock the first application tool (140), is rotatable from a predetermined locking position about a longitudinal axis (499) of the tool receptacle (150) into a predetermined unlocking position, **characterized in that** provision is made of a spring-loaded restoring device (325, 326, 328, 428; 1025; 1325) which is configured to urge the actuating element (244) to rotate into the predetermined locking position.

2. Portable power tool according to Claim 1, **characterized in that** the locking apparatus (240) has a blocking member (242) for blocking the actuating element (244) in the predetermined locking position or in the predetermined unlocking position.

3. Portable power tool according to Claim 2, **characterized in that** the actuating element (244) has a first and a second stopping member (541, 543), wherein the first stopping member (541) bears against the blocking member (242) in order to block the actuating element (244) in the predetermined unlocking position, and the second stopping member (543) bears against the blocking member (242) in order to block the actuating element (244) in the predetermined locking position.

4. Portable power tool according to Claim 2 or 3, **characterized in that** the blocking member (242) is configured to prevent the actuating element (244) from rotating beyond the predetermined locking position or the predetermined unlocking position.

5. Portable power tool according to Claim 3 or 4, **characterized in that** the actuating element (244) is formed in a sleeve-like manner and has on its inner circumference (341) a cutout (342) in which the blocking member (242) is at least sectionally arranged and on which the first and second stopping member (541, 543) are formed in a shoulder-like manner.

6. Portable power tool according to Claim 5, **characterized in that** the sleeve-like actuating element (244) is arranged coaxially with the longitudinal axis (499) of the tool receptacle (150).

7. Portable power tool according to one of Claims 2 to 6, **characterized in that** the blocking member (242) is formed in a bolt-like manner.

8. Portable power tool according to one of the preceding claims, **characterized in that** the locking apparatus (240) has a spring element (325) which is configured to subject the actuating element (244) to a predetermined spring force in a direction (666) extending transversely to the longitudinal axis (499) of the tool receptacle.

9. Portable power tool according to Claim 8, **characterized in that** the actuating element (244) is formed in a sleeve-like manner and has on its inner circumference (341) a groove (428) having a stop (628) against which the spring element (325) bears in the predetermined locking position.

10. Portable power tool according to Claim 9, **characterized in that** the spring element (325) is configured to subject the actuating element (244) to its spring force in the predetermined unlocking position in order to allow the actuating element (244) to rotate relative to the tool receptacle (150), wherein the groove (428) is displaced on the spring element (325) until the stop (628) butts against the spring element (325).

11. Portable power tool according to one of Claims 8 to 10, **characterized in that** the spring element (325) has a compression spring (327) and a ball (328) that is urged against the actuating element (244) by said compression spring (327).

12. Tool receptacle (150) which has a polygonal inner receptacle (290) and a polygonal outer receptacle (210), wherein the polygonal inner receptacle (290) is configured to be connected to a first application tool (140) which is lockable in the polygonal inner receptacle (290) by way of a locking apparatus (240) assigned to the tool receptacle (150), and the polygonal outer receptacle (210) is configured to be connected to a second application tool which has an internal polygonal coupling that is pushable onto the polygonal outer receptacle (210), wherein the locking apparatus (240) has an actuating element (244) which, in order to unlock the first application tool (140), is rotatable from a predetermined locking position about a longitudinal axis (499) of the tool receptacle (150) into a predetermined unlocking position, **characterized in that** provision is made of a spring-loaded restoring device (325, 326, 328, 428; 1025; 1325) which is configured to urge the actuating element (244) to rotate into the predetermined locking position.

## Revendications

1. Machine-outil à main (100) munie d'un logement d'outil (150) qui comprend un logement intérieur polygonal (290) et un logement extérieur polygonal (210), le logement intérieur polygonal (290) étant réalisé en vue de la liaison à un premier outil à insérer (140) qui peut être verrouillé dans le logement intérieur polygonal (290) à l'aide d'un dispositif de verrouillage (240) associé au logement d'outil (150), et le logement extérieur polygonal (210) étant réalisé en vue de la liaison à un deuxième outil à insérer qui comprend un accouplement polygonal intérieur pouvant être enfilé sur le logement extérieur polygonal (210), le dispositif de verrouillage (240) comprenant un élément d'actionnement (244) qui est rotatif à partir d'une position de verrouillage prédéfinie autour d'un axe longitudinal (499) du logement d'outil (150) dans une position de déverrouillage prédéfinie en vue du déverrouillage du premier outil à insérer (140), **caractérisée en ce qu'**un dispositif de rappel (325, 326, 328, 428 ; 1025 ; 1325) sollicité par ressort est prévu, lequel dispositif de rappel est réalisé pour solliciter l'élément d'actionnement (244) en vue de la rotation jusqu'à la position de verrouillage prédéfinie.

2. Machine-outil à main selon la revendication 1, **caractérisée en ce que** le dispositif de verrouillage (240) comprend un organe de blocage (242) en vue du blocage de l'élément d'actionnement (244) dans la position de verrouillage prédéfinie ou dans la position de déverrouillage prédéfinie.

3. Machine-outil à main selon la revendication 2, **caractérisée en ce que** l'élément d'actionnement (244) comprend un premier et un deuxième organe d'arrêt (541, 543), le premier organe d'arrêt (541) s'appliquant contre l'organe de blocage (242) en vue du blocage de l'élément d'actionnement (244) dans la position de déverrouillage prédéfinie, et le deuxième organe d'arrêt (543) s'appliquant contre l'organe de blocage (242) en vue du blocage de l'élément d'actionnement (244) dans la position de verrouillage prédéfinie.

4. Machine-outil à main selon la revendication 2 ou 3, **caractérisée en ce que** l'organe de blocage (242) est réalisé pour empêcher une rotation de l'élément d'actionnement (244) au-delà de la position de verrouillage prédéfinie ou de la position de déverrouillage prédéfinie.

5. Machine-outil à main selon la revendication 3 ou 4, **caractérisée en ce que** l'élément d'actionnement (244) est réalisé en forme de douille et comprend un évidement (342) sur sa périphérie intérieure (341), dans lequel évidement est disposé au moins en partie l'organe de blocage (242) et sur lequel le premier et le deuxième organe d'arrêt (541, 543) sont réalisés en forme d'épaulement.

6. Machine-outil à main selon la revendication 5, **caractérisée en ce que** l'élément d'actionnement (244) en forme de douille est disposé de manière coaxiale par rapport à l'axe longitudinal (499) du logement d'outil (150).

7. Machine-outil à main selon l'une quelconque des revendications 2 à 6, **caractérisée en ce que** l'organe de blocage (242) est réalisé en forme de goupille.

8. Machine-outil à main selon l'une quelconque des revendications précédentes, **caractérisée en ce que** le dispositif de verrouillage (240) comprend un élément de ressort (325) qui est réalisé pour solliciter l'élément d'actionnement (244) avec une force de ressort prédéfinie dans une direction (666) s'étendant transversalement à l'axe longitudinal (499) du logement d'outil.

9. Machine-outil à main selon la revendication 8, **caractérisée en ce que** l'élément d'actionnement (244) est réalisé en forme de douille et présente sur sa périphérie intérieure (341) une rainure (428) dotée d'une butée (628) contre laquelle l'élément de ressort (325) s'applique dans la position de verrouillage prédéfinie.

10. Machine-outil à main selon la revendication 9, **caractérisée en ce que** l'élément de ressort (325) est réalisé pour solliciter l'élément d'actionnement (244) avec sa force de ressort dans la position de déverrouillage prédéfinie, afin de permettre une rotation de l'élément d'actionnement (244) par rapport au logement d'outil (150), la rainure (428) étant déplacée sur l'élément de ressort (325) jusqu'à ce que la butée (628) vienne en butée contre l'élément de ressort (325).

11. Machine-outil à main selon l'une quelconque des revendications 8 à 10, **caractérisée en ce que** l'élément de ressort (325) comprend un ressort de compression (327) et une bille (328) sollicitée par celui-ci contre l'élément d'actionnement (244).

12. Logement d'outil (150) qui comprend un logement intérieur polygonal (290) et un logement extérieur polygonal (210), le logement intérieur polygonal (290) étant réalisé en vue de la liaison à un premier outil à insérer (140) qui peut être verrouillé dans le logement intérieur polygonal (290) à l'aide d'un dispositif de verrouillage (240) associé au logement d'outil (150), et le logement extérieur polygonal (210) étant réalisé en vue de la liaison à un deuxième outil à insérer qui comprend un accouplement polygonal intérieur pouvant être enfilé sur le logement extérieur polygonal (210), le dispositif de verrouillage (240) comprenant un élément d'actionnement (244) qui est rotatif à partir d'une position de verrouillage prédéfinie autour d'un axe longitudinal (499) du logement d'outil (150) dans une position de déverrouillage prédéfinie en vue du déverrouillage du premier outil à insérer (140), **caractérisé en ce qu'**un dispositif de rappel (325, 326, 328, 428 ; 1025 ; 1325) sollicité par ressort est prévu, lequel dispositif de rappel est réalisé pour solliciter l'élément d'actionnement (244) en vue de la rotation jusqu'à la position de verrouillage prédéfinie.
